# FASCICULE DE BREVET EUROPEEN

(11) **EP 3 109 005 B1**
(45) Date de publication et mention de la délivrance du brevet: **26.08.2020**
(21) Numéro de dépôt: 16170027.3
(22) Date de dépôt: 17.05.2016
(51) Int. Cl.: B25B 27/00, B29C 63/00

(54) **DISPOSITIF D'APPLICATION D'UN ÉLÉMENT ADHÉSIF SUR UNE SURFACE MÉTALLIQUE**
VORRICHTUNG ZUR AUFBRINGUNG EINES KLEBEELEMENTS AUF EINE METALLOBERFLÄCHE
DEVICE FOR APPLYING AN ADHESIVE ELEMENT TO A METAL SURFACE

(30) Priorité: 19.06.2015 FR 1555655
(43) Date de publication de la demande: 28.12.2016
(73) Titulaire: ADHEX TECHNOLOGIES, 21300 Chenôve (FR)
(72) Inventeur: DURAND, Hervé, 21000 Dijon (FR); RAPENNE, Emannuel, 21850 Saint-Appolinaire (FR)
(74) Mandataire: Gevers & Orès

(56) Documents cités:
- EP-A2- 2 581 171
- DE-A1-102013 217 813

## Description

### Domaine technique

La présente invention concerne un dispositif d'application d'un élément adhésif sur une surface et plus particulièrement un dispositif d'application d'un élément raidisseur de toit d'un véhicule automobile constitué d'au moins une pièce en carton ondulé et une couche adhésive, éventuellement sous la forme de bandes, sensible à la pression.

### Etat de la technique

Il est bien connu que, dans le domaine de l'automobile, les constructeurs cherchent à diminuer le poids total de leurs véhicules afin d'en réduire la consommation énergétique et d'en abaisser le coût de revient. Ces efforts d'allégement portent en priorité sur les pièces métalliques de carrosserie car elles contribuent significativement au poids total des véhicules. Ces efforts d'allégement portent notamment sur le pavillon de toit des véhicules dans la mesure où sa surface est grande et où il ne constitue pas une pièce structurante ou de sécurité en cas de chocs frontal ou latéral.

Ainsi, la réduction permanente de l'épaisseur de la tôle métallique du pavillon de toit a conduit à fabriquer des pavillons de toit de moins en moins rigides, extrêmement souples et déformables. Les pavillons de toit présentent désormais une déformation systématique et visible à l'œil nu, cette déformation étant accentuée par la brillance et le glacis surfacique de la peinture appliquée sur l'extérieur des pavillons.

Afin de remédier à ces inconvénients, on a déjà imaginé des dispositifs dits raidisseurs de toit généralement constitués d'une plaque en carton ondulé munie d'une couche adhésive sensible à la pression et permettant de limiter la déformation des pavillons de toit notamment.

C'est le cas par exemple de la demande de brevet français FR 2 299 964, des demandes de brevet JP10071646, DE 19702581, JP8332904 et EP 1 298 034, et de la demande de brevet français FR 3 011 519 de la demanderesse. Le document EP 2 581 171 A2 divulgue un dispositif d'application selon le préambule de la revendication 1.

Ces raidisseurs de toit cartonnés sont appliqués sur la face intérieure du pavillon de toit des véhicules manuellement et une certaine force doit être appliquée sur le raidisseur afin de permettre un parfait encollage sur la face intérieure du pavillon de toit.

A cet effet, un système pneumatique complexe avec tirage sous vide est utilisé. Le système consiste à placer le raidisseur dans un cadre spécifique pourvu de bourrelets périphériques assurant l'étanchéité de l'ensemble après mise en contact avec le pavillon. Ledit cadre est pourvu d'un système de mise en dépression par une pompe à vide permettant d'éliminer l'air situé entre le raidisseur et le pavillon de toit. Lorsqu'un certain degré de dépression est atteint, le raidisseur en carton est suffisamment déformé pour épouser la forme du pavillon de toit, en particulier dans les zones courbes, garantissant ainsi un contact antre les bandes adhésives et le pavillon, ainsi qu'un niveau de compression suffisant sur les bandes adhésives plaquées contre le pavillon de toit.

Ainsi l'opérateur en bord de ligne de montage doit d'abord introduire par une ouverture latérale, par exemple une porte, le cadre spécifique équipé du raidisseur auto-adhésif, le positionner avec précision au droit de la zone du pavillon de toit devant recevoir ledit raidisseur, le plaquer le plus hermétiquement possible sous le pavillon de toit, puis déclencher la mise sous vide et attendre que le pompage de l'air soit suffisant pour atteindre la valeur de pression nécessaire.

Ce type de système de pose présente donc l'inconvénient de nécessiter un grand nombre d'opérations qui sont longues et complexes, ce qui grève le coût de la pose.

Afin de réduire les coûts de pose, de manière alternative, les opérateurs utilisent des dispositifs de pose constitués d'un rouleau monté fou à l'extrémité d'un manche afin d'exercer une pression sur les raidisseurs lors du montage.

Au cours de cette opération, la pression doit être exercée en permanence sur le raidisseur que l'on souhaite monter. Cela provoque une diminution de la performance de l'opérateur réalisant le montage des raidisseurs de toit en raison de la fatigue et du manque d'ergonomie de sorte que, au cours du temps, la qualité du montage diminue ce qui conduit à des défauts, et plus particulièrement à un mauvais encollage des raidisseurs de toit sur la face intérieure des pavillons de toit, conduisant à une mauvaise rigidification desdits pavillons de toit.

Afin de remédier à cet inconvénient, on a déjà imaginé un dispositif de pose procurant une pression suffisante pour assurer une parfaite adhésion de l'élément raidisseur.

C'est le cas notamment de la demande de brevet français FR 2 948 303 qui décrit un outil d'application d'un élément adhésif sur une surface d'application. Ledit outil comprend un organe de préhension, un organe d'application dudit élément adhésif, ledit organe d'application étant constitué d'un arbre et d'un rouleau monté libre en rotation sur ledit arbre, et des moyens de liaison entre l'organe de préhension et l'organe d'application. Lesdits moyens de liaison comprennent un organe support sur lequel l'organe d'application est monté rotatif, des moyens de basculement conçus pour faire basculer l'organe de support entre une position de verrouillage et une position de déverrouillage lorsqu'un couple seuil prédéterminé est appliqué sur l'organe d'application, et un organe de verrouillage conçu pour bloquer en rotation l'organe d'application lorsque ledit organe de support occupe la position de verrouillage et laisser libre en rotation l'organe d'application lorsque ledit organe de support occupe la position de déverrouillage.

Ce type d'outil bien que permettant l'application d'une pression suffisante pour procurer une parfaite adhésion de l'élément raidisseur présente l'inconvénient de ne pas être ergonomique et de nécessiter de la part de l'opérateur un effort physique important de sorte que sa productivité diminue au cours du temps.

Afin de remédier à cet inconvénient, on a déjà imaginé des dispositifs de pose d'éléments adhésifs sur une paroi métallique, tels qu'un raidisseur de toit sur la face intérieure d'un pavillon de toit, ou d'une pièce plastique sur la face intérieure d'une portière d'un véhicule automobile, constitués d'au moins un rouleau magnétique monté fou à l'extrémité d'un manche, la force magnétique procurant une pression constante et suffisante, en lieu et place de l'opérateur, ce dernier n'ayant qu'à assurer le déplacement et le guidage du rouleau magnétique.

C'est le cas notamment des demandes de brevet français FR 2 852 544 et FR 2 874 547 et du brevet européen EP 2 432 624.

Le document FR 2 852 544 décrit une molette magnétique fixée sur une poignée permettant l'application de bandes pelliculaires ou panneaux préencollés sur des surfaces métalliques par action magnétique. Ladite molette est constituée d'une pluralité de joues en acier entre lesquelles sont positionnés des anneaux magnétiques permanents, lesdites joues et les anneaux magnétiques étant montés libre en rotation autour d'un axe solidaire de la poignée.

Le document FR 2 874 547 décrit un dispositif d'application d'un élément sur une surface d'application, notamment d'un élément adhésif sur une surface métallique de porte de véhicule automobile, comprenant un élément de guidage comportant une poignée de préhension et un bras support coudé et solidaire de la poignée, ledit support coudé comprenant un arbre sur lequel sont montées libres en rotation des roues aimantées.

Le document EP 2 432 624 décrit un dispositif à rouleau destiné à être utilisé dans l'industrie automobile pour les pièces de montage montées en pressant sur ces dernières. Le dispositif comporte un manche de préhension coudé, un rouleau monté libre en rotation à l'extrémité libre du manche coudé, ledit rouleau étant un aimant cylindrique recouvert d'un film plastique, et une unité de peinture comportant une substance colorante solidaire du manche et permettant le dépôt de la substance colorante sur l'aimant cylindrique formant le rouleau.

Tous ces outils de pose de l'art antérieur sont plus particulièrement destinés à la pose d'élément sur une portière d'un véhicule automobile et ne sont pas adaptés à la pose d'un raidisseur de toit sur un pavillon de toit d'un véhicule qui présente une surface courbe.

Il existe donc un besoin pour un dispositif d'application d'un élément sur une surface d'application métallique courbe afin de faciliter la pose pour l'opérateur tout en évitant une détérioration de l'élément à poser et/ou de la surface d'application métallique.

### Divulguation de l'invention

L'un des buts de l'invention est donc de remédier à ces inconvénients en proposant un dispositif d'application d'un élément sur une surface d'application métallique de conception simple et peu onéreuse, procurant une pose aisée pour l'opérateur tout en évitant une détérioration de l'élément à poser et/ou de la surface d'application métallique.

A cet effet et conformément à l'invention, il est proposé un dispositif d'application d'un élément adhésif sur une surface d'application métallique, notamment d'un raidisseur de toit auto-adhésif sur la face intérieure d'un pavillon de toit d'un véhicule automobile, comprenant au moins un organe de préhension et un organe d'application constitué d'au moins un rouleau magnétique monté libre en rotation autour d'un arbre ; ledit dispositif est remarquable en ce que ledit arbre est solidarisé dans sa partie centrale à une tête solidaire de l'extrémité libre de l'organe de préhension par une liaison rotule et ledit arbre porte au moins deux rouleaux magnétiques montés libres en rotation autour dudit arbre et s'étendant de part et d'autre de ladite liaison rotule.

On comprend bien que la liaison rotule permet, contrairement aux dispositifs de l'art antérieur, aux rouleaux s'étendant de part et d'autre de ladite liaison rotule d'assurer une pression constante sur l'élément adhésif même lorsque la surface d'application métallique est courbe, notamment concave lorsqu'il s'agit de la face intérieure du pavillon de toit.

Ladite liaison rotule est, de préférence, constituée au moins d'un siège sensiblement sphérique formé dans la tête de l'organe d'application et dans lequel s'étend une sphère comportant un trou traversant diamétralement ladite sphère et dans lequel s'étend l'arbre portant les rouleaux magnétiques.

Avantageusement, la liaison rotule comporte une pièce sensiblement cylindrique obtenue dans un élastomère et s'étendant entre le siège et la sphère de la rotule. Ainsi, la liaison rotule est une rotule silentbloc, marque déposée, permettant de procurer un amortissement.

Par ailleurs, l'arbre portant les rouleaux magnétiques consiste soit en une tige cylindrique rectiligne soit en une tige cylindrique en forme générale de U dont les extrémités supérieures sont repliées vers l'extérieur pour former deux branches coaxiales, chaque branche portant au moins un rouleau magnétique.

De manière avantageuse, le dispositif suivant l'invention comporte à chacune des extrémités libre de l'arbre un disque obtenu dans du plastique ou dans un élastomère afin d'amortir les chocs. De cette manière, l'opérateur évite d'endommager le pavillon de toit lorsque les rouleaux font saillies du raidisseur de toit et viennent buter contre ledit pavillon de toit.

Par ailleurs, au moins deux rouleaux magnétiques s'étendant de part et d'autre de la tête de l'organe d'application comportent des moyens de marquage de l'élément adhésif à poser. De cette manière, l'opérateur peut visualiser les zones sur lesquelles une pression a été appliquée et les zones où il doit passer pour que le collage soit parfait.

De préférence, lesdits moyens de marquage consistent en des moyens de perforation de l'élément adhésif.

Lesdits moyens de perforation consistent en des picots solidaires de la périphérie des rouleaux magnétiques et s'étendant radialement.

De plus, lesdits picots présentent une forme conique.

Afin d'éviter que les rouleaux magnétiques et/ou les picots n'endommagent le pavillon de toit lorsque l'on approche de l'extrémité du raidisseur de toit à coller, le dispositif suivant l'invention comporte une butée constituée d'une pièce solidaire de la tête de l'organe d'application, s'étendant dans le prolongement de l'organe de préhension, entre les rouleaux magnétiques et faisant saillie de ces derniers.

Par ailleurs, l'organe de préhension est constitué d'un manche comportant au moins deux parties, une partie dite proximale portant une poignée de préhension, et une partie dite distale articulée à la partie proximale et dont l'extrémité libre porte la tête de l'organe d'application.

De préférence, la partie distale est articulée à la partie proximale par une articulation suivant au moins un axe.

Par ailleurs, l'articulation comporte des moyens de blocage dans une position angulaire déterminée.

De plus, les rouleaux magnétiques présentent un champ magnétique compris entre 1000 et 6000 Gauss afin que ledit champ magnétique s'exerce à travers l'épaisseur de l'élément adhésif pour exercer une pression suffisante des rouleaux sur ledit élément adhésif et permettre le retrait des rouleaux magnétiques manuellement après l'application dudit élément adhésif.

### Brève description des dessins

D'autres avantages et caractéristiques ressortiront mieux de la description qui va suivre, de plusieurs variantes d'exécution, données à titre d'exemples non limitatifs, du dispositif d'application d'un élément adhésif sur une surface d'application métallique suivant l'invention, à partir des dessins annexés sur lesquels :
- la figure 1 est une vue en perspective éclatée d'un élément de toit destiné à être positionné sur un pavillon de toit d'un véhicule automobile au moyen d'un dispositif d'application suivant l'invention,
- la figure 2 est une vue de dessus d'un élément de toit destiné à être positionné sur un pavillon de toit d'un véhicule automobile au moyen d'un dispositif d'application suivant l'invention,
- la figure 3 est une vue en perspective du dispositif d'application suivant l'invention,
- la figure 4 est une vue en perspective arrière de la tête portant les rouleaux du dispositif d'application suivant l'invention,
- la figure 5 est une vue en perspective avant de la tête portant les rouleaux du dispositif d'application suivant l'invention,
- la figure 6 est une vue en coupe sagittale de la tête portant les rouleaux du dispositif d'application suivant l'invention,
- la figure 7 est une vue en coupe sagittale d'une variante d'exécution de la tête portant les rouleaux du dispositif d'application suivant l'invention.

### Mode de réalisation de l'invention

Par souci de clarté, dans la suite de la description, les mêmes éléments ont été désignés par les mêmes références aux différentes figures. De plus, les diverses vues ne sont pas tracées à l'échelle.

On décrira ci-après un dispositif d'application d'un raidisseur de toit cartonné comportant des bandes adhésives sur la face intérieure d'un pavillon de toit d'un véhicule automobile ; toutefois, il est bien évident que le dispositif d'application pourra être utilisé pour l'application de tout élément auto-adhésif obtenu dans un matériau quelconque, tel que du plastique, sur toute surface d'application métallique, telle qu'une porte d'un véhicule par exemple, sans pour autant sortir du cadre de l'invention.

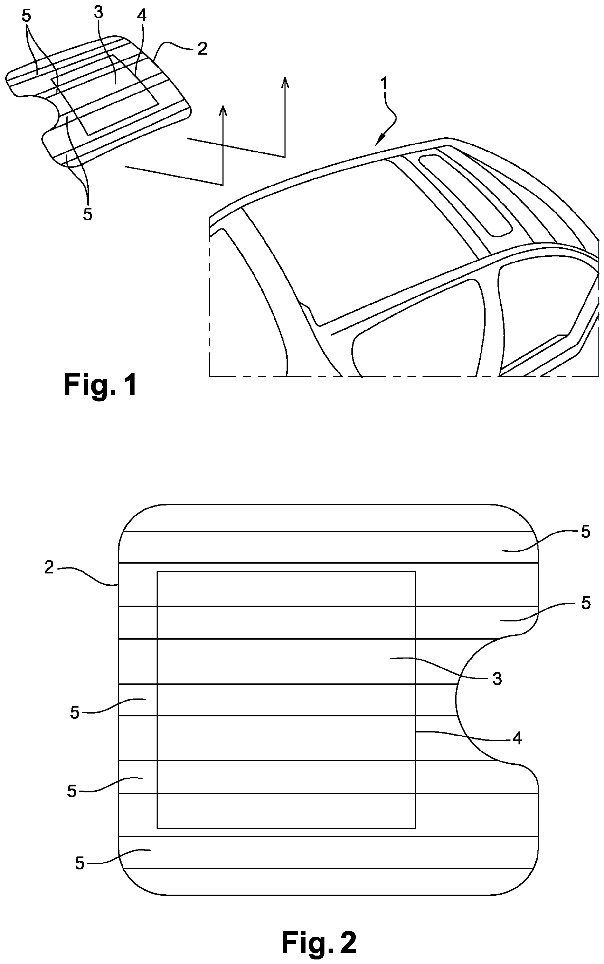

En référence aux figures 1 et 2, l'élément de toit, également appelé raidisseur de toit, pour améliorer la rigidité d'un pavillon de toit d'un véhicule 1 comporte une pièce sensiblement rectangulaire en carton ondulé 2 et une pièce amortissante 3, apte à absorber les vibrations et solidaires de la pièce rectangulaire en carton ondulé 2. La pièce sensiblement rectangulaire en carton ondulé 2 est obtenue dans du carton ondulé à double cannelure dans lequel est formé au moins un creux 4, ladite pièce amortissante 3 s'étendant dans ledit creux 4 de telle sorte que la face supérieure de ladite pièce amortissante affleure la face supérieure de la pièce rectangulaire en carton ondulé 2. Afin d'assurer la fixation du raidisseur de toit sur le pavillon de toit du véhicule 1, la pièce en carton ondulé 2 comporte une pluralité de bandes d'adhésif sensible à la pression 5 déposées sur la face supérieure de ladite pièce en carton ondulé 2.

On notera que le raidisseur de toit est conforme au raidisseur de toit décrit dans la demande de brevet français FR 3 011 519 de la demanderesse ; toutefois, il est bien évident que le raidisseur de toit pourra présenter une forme quelconque, comprendre une ou plusieurs pièces amortissantes, ne pas comprendre de pièce amortissante, et être obtenue dans un autre matériau que du carton ondulé sans pour autant sortir du cadre de l'invention.

Pour fixer le raidisseur de toit sur le pavillon de toit d'un véhicule 1, un opérateur introduit le raidisseur de toit par une ouverture latérale, par exemple une porte, puis il le positionne au droit de la zone du pavillon de toit 1 devant recevoir ledit raidisseur, avant de le plaquer sous le pavillon de toit. Ensuite, l'opérateur applique une pression sur ledit raidisseur de toit au moyen du dispositif d'application conforme à l'invention.

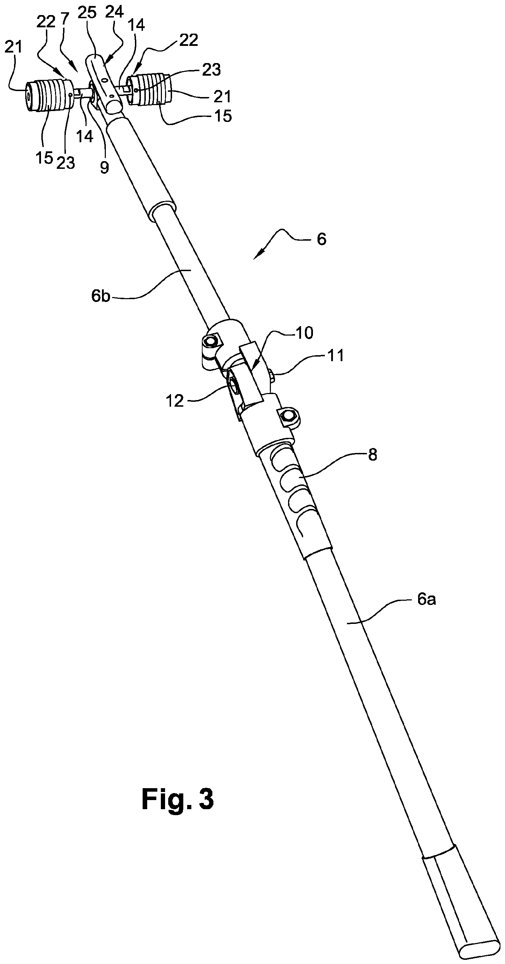

Ledit dispositif d'application suivant l'invention, en référence à la figure 3, est constitué d'un organe de préhension 6 et d'un organe d'application 7.

Ledit organe de préhension 6 est constitué d'un manche comportant deux parties 6a et 6b, une première partie dite proximale 6a portant une poignée de préhension 8, et une seconde partie dite distale 6b articulée à la partie proximale 6a et dont l'extrémité libre porte la tête 9 de l'organe d'application 7 comme il sera détaillé plus loin. Dans cet exemple particulier de réalisation, les parties proximale 6a et distale 6b sont constituées d'un tube cylindrique qui peut être obtenu dans tout matériau amagnétique, de préférence léger, tel que de l'aluminium ou du carbone par exemple, afin d'éviter toute fatigue pour l'opérateur le manipulant. La partie distale 6b est articulée à la partie proximale 6a par une articulation 10 suivant au moins un axe. Cette articulation 10 comporte avantageusement des moyens de blocage permettant de bloquer la partie proximale 6a dans une position angulaire déterminée par rapport à la partie distale 6b du manche 6. Dans cet exemple particulier de réalisation, lesdits moyens de blocage sont constitués par un écrou 11 formant l'axe de l'articulation et un boulon 12.

Il est bien évident que le manche pourra présenter une forme et des dimensions quelconques, ledit manche pouvant également se présenter sous une forme monobloc sans comporter d'articulation par exemple, et que les moyens de blocage de l'articulation 10 pourront consister dans tout moyen de blocage bien connu de l'homme du métier sans pour autant sortir du cadre de l'invention.

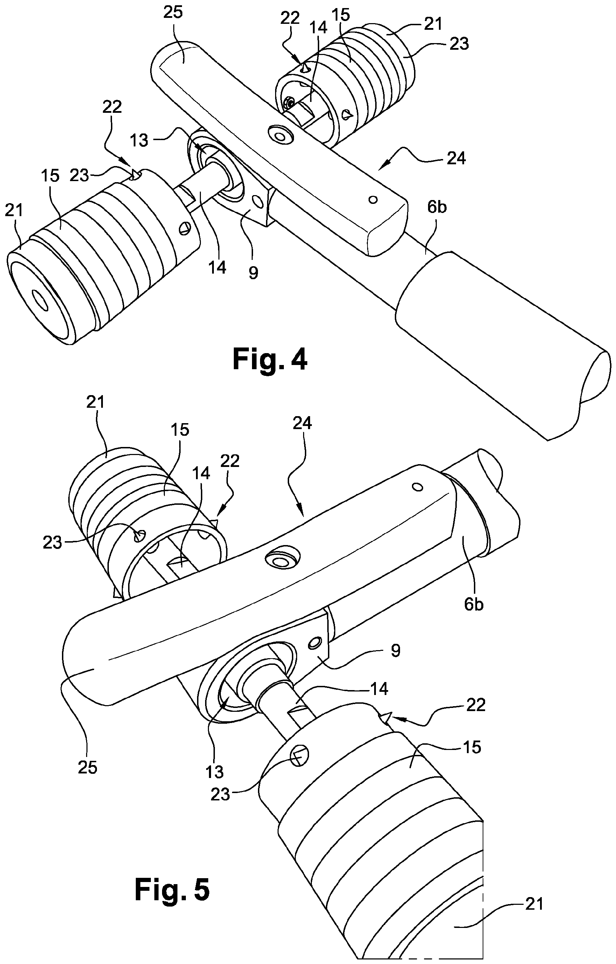

En référence aux figures 3 à 6, les moyens d'application 7 sont constitués d'une tête 9 solidaire de l'extrémité libre de la partie distale 6b du manche 6 et à laquelle est articulé par une liaison rotule 13, dans sa partie centrale, un arbre 14 présentant la forme d'une tige cylindrique rectiligne, s'étendant sensiblement perpendiculairement à la partie distale 6b du manche 6 et portant deux rouleaux magnétiques 15, lesdits rouleaux magnétiques 15 étant montés libre en rotation sur ledit arbre 14 et s'étendant de part et d'autre de ladite tête 9. On comprend bien que la liaison rotule 13 permet aux rouleaux 15 s'étendant de part et d'autre de ladite liaison rotule d'assurer une pression constante sur l'élément adhésif même lorsque la surface d'application métallique est courbe, notamment concave lorsqu'il s'agit de la face intérieure du pavillon de toit. Les rouleaux magnétiques 15 sont montés libre en rotation sur l'arbre 14 au moyen de roulements 16.

Lesdits rouleaux magnétiques 15 présentent un champ magnétique compris entre 1000 et 6000 Gauss afin que ledit champ magnétique s'exerce à travers l'épaisseur de l'élément adhésif pour exercer une pression suffisante des rouleaux 15 sur ledit élément adhésif et permettre le retrait des rouleaux magnétiques manuellement après l'application dudit élément adhésif. On observera que la valeur du champ magnétique des rouleaux 15 pourra aisément être adaptée par l'homme du métier en fonction notamment de l'épaisseur de l'élément adhésif à appliquer, du matériau dans lequel est obtenu l'élément adhésif et du matériau magnétique de la surface d'application.

Dans cet exemple particulier de réalisation, les rouleaux magnétiques 15 sont des aimants permanents de forme cylindrique. Il est bien évident que chaque rouleau magnétique 15 pourra consister dans une pluralité d'aimants permanents de forme annulaire sans sortir du cadre de l'invention.

Accessoirement, le dispositif d'application suivant l'invention pourra comporter des moyens d'annulation de tout ou partie du champ magnétique des rouleaux magnétiques 15 afin de faciliter le retrait des rouleaux magnétiques 15 du pavillon de toit après l'application de l'élément adhésif sur ce dernier. Ces moyens d'annulation du champ magnétique pourront par exemple consister en une bobine connectée à une source d'alimentation en électricité, telle qu'une batterie par exemple, s'étendant à l'intérieur de l'arbre 14 et/ou de chaque rouleau 15, de telle manière que la circulation d'un courant prédéterminé procure l'annulation sensiblement complète du flux magnétique des rouleaux magnétiques. La circulation du courant à travers la bobine sera alors pilotée au moyen d'un interrupteur solidaire du manche 6 du dispositif d'application.

Selon une variante d'exécution, non représentée sur les figures, lesdits rouleaux magnétiques 15 pourront consister dans des électro-aimants bien connus de l'homme du métier.

Ladite liaison rotule 13 est constituée d'un siège 17 sensiblement sphérique formé dans la tête 9 de l'organe d'application 7 et dans lequel s'étend une sphère 18 comportant un trou 19 traversant diamétralement ladite sphère 18 et dans lequel s'étend l'arbre 14 portant les rouleaux magnétiques 15. Par ailleurs, ladite liaison rotule 13 comporte une pièce sensiblement cylindrique 20 obtenue dans un élastomère et s'étendant entre le siège 17 et la sphère 18 de la rotule. Ainsi, la liaison rotule 13 est une rotule silentbloc, marque déposée, permettant de procurer un amortissement.

De manière avantageuse, le dispositif suivant l'invention comporte à chacune des extrémités libre de l'arbre 14 un disque 21 obtenu dans du plastique ou dans un élastomère afin d'amortir les chocs. De cette manière, l'opérateur évite d'endommager le pavillon de toit lorsque les rouleaux 15 font saillies du raidisseur de toit et viennent buter contre ledit pavillon de toit.

Par ailleurs, afin de permettre à l'opérateur de visualiser les zones sur lesquelles une pression a été appliquée et les zones où il doit passer pour que le collage soit parfait, les deux rouleaux magnétiques 15 s'étendant de part et d'autre de la tête 9 de l'organe d'application 7 comportent des moyens de marquage 22 de l'élément adhésif à poser. Ces moyens de marquage consistent en des moyens de perforation de l'élément adhésif. Lesdits moyens de perforation consistent en des picots 23 solidaires de la périphérie des rouleaux magnétiques 15 et s'étendant radialement, chaque picot 23 présentant une forme conique.

Il est bien évident que les picots 23 pourront présenter une forme quelconque et que les moyens de perforation pourront être substitués par des moyens de découpe équivalents sans pour autant sortir du cadre de l'invention.

Accessoirement, afin d'éviter que les rouleaux magnétiques 15 et/ou les picots 23 n'endommagent le pavillon de toit lorsque l'on approche de l'extrémité du raidisseur de toit à coller, le dispositif suivant l'invention comporte une butée 24 constituée d'une pièce 25 solidaire de la tête 9 de l'organe d'application 7, s'étendant dans le prolongement de l'organe de préhension 6, entre les rouleaux magnétiques 15 et faisant saillie de ces derniers.

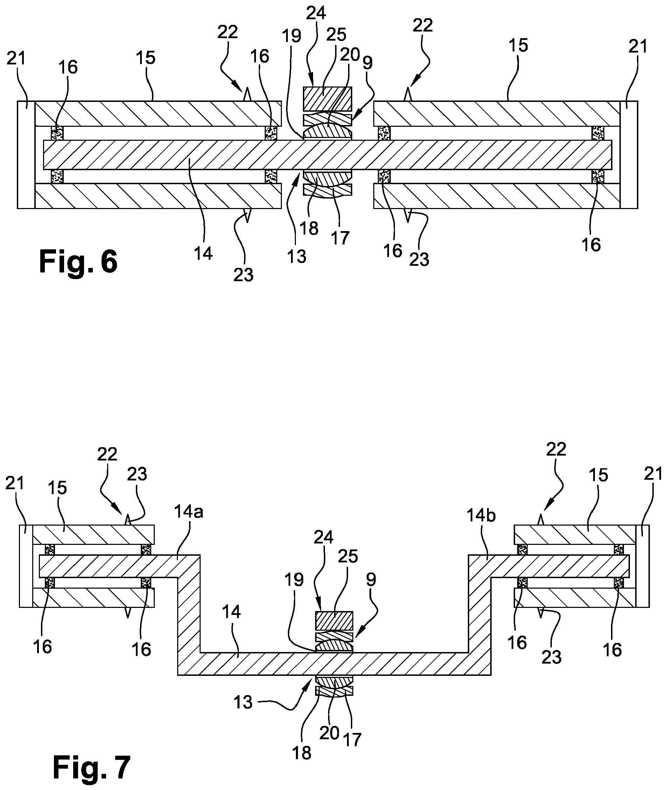

Selon une variante d'exécution, en référence à la figure 7, le dispositif d'application suivant l'invention est constitué de la même manière que précédemment d'un organe de préhension 6 et d'un organe d'application 7. Ledit organe de préhension 6 est constitué d'un manche comportant deux parties 6a et 6b, une première partie dite proximale 6a portant une poignée de préhension 8, et une seconde partie dite distale 6b articulée à la partie proximale 6a et dont l'extrémité libre porte la tête 9 de l'organe d'application 7. La partie distale 6b est articulée à la partie proximale 6a par une articulation 10 suivant au moins un axe. Cette articulation 10 comporte avantageusement des moyens de blocage permettant de bloquer la partie proximale 6a dans une position angulaire déterminée par rapport à la partie distale 6b du manche 6. Lesdits moyens d'application 7 sont constitués d'une tête 9 solidaire de l'extrémité libre de la partie distale 6b du manche 6 et à laquelle est articulé par une liaison rotule 13, dans sa partie centrale, un arbre 14 s'étendant sensiblement perpendiculairement à la partie distale 6b du manche 6 et portant deux rouleaux magnétiques 15, lesdits rouleaux magnétiques 15 étant montés libre en rotation sur ledit arbre 14 et s'étendant de part et d'autre de ladite tête 9. Le dispositif suivant l'invention comporte également à chacune des extrémités libre de l'arbre 14 un disque 21 obtenu dans du plastique ou dans un élastomère afin d'amortir les chocs. Par ailleurs, les deux rouleaux magnétiques 15 s'étendant de part et d'autre de la tête 9 de l'organe d'application 7 comportent des moyens de marquage 22 de l'élément adhésif à poser. Ces moyens de marquage 22 consistent en des moyens de perforation de l'élément adhésif constitués par des picots 23 solidaires de la périphérie des rouleaux magnétiques 15 et s'étendant radialement, chaque picot 23 présentant une forme conique.

L'organe d'application 7 se distingue de celui décrit précédemment par le fait que l'arbre 14 consiste en une tige cylindrique en forme générale de U dont les extrémités supérieures sont repliées vers l'extérieur pour former deux branches coaxiales 14a et 14b, chaque branche 14a, 14b portant au moins un rouleau magnétique 15.

Enfin, il est bien évident que les exemples que l'on vient de donner ne sont que des illustrations particulières en aucun cas limitatives quant aux domaines d'application de l'invention.

## Revendications

1. Dispositif d'application d'un élément adhésif sur une surface d'application métallique, notamment d'un raidisseur de toit auto-adhésif sur la face intérieure d'un pavillon de toit (1) d'un véhicule automobile, comprenant au moins un organe de préhension (6) et un organe d'application (7) constitué d'au moins un rouleau magnétique (15) monté libre en rotation autour d'un arbre (14), ledit arbre (14) étant solidarisé dans sa partie centrale à une tête (9) solidaire de l'extrémité libre de l'organe de préhension (6) par une liaison rotule (13) **caractérisé en ce que** ledit arbre (14) porte au moins deux rouleaux magnétiques (15) montés libres en rotation autour dudit arbre (14) et s'étendant de part et d'autre de ladite liaison rotule (13).

2. Dispositif suivant la revendication 1 ***caractérisé* en ce que** ladite liaison rotule (13) est constituée au moins d'un siège (17) sensiblement sphérique formé dans la tête (9) de l'organe d'application (7) et dans lequel s'étend une sphère (18) comportant un trou (19) traversant diamétralement ladite sphère (18) et dans lequel s'étend l'arbre (14) portant les rouleaux magnétiques (15).

3. Dispositif suivant la revendication 2 ***caractérisé* en ce que** la liaison rotule (13) comporte une pièce sensiblement cylindrique (20) obtenue dans un élastomère et s'étendant entre le siège (17) et la sphère (18) de la liaison rotule (13).

4. Dispositif suivant l'une quelconque des revendications 1 à 3 ***caractérisé* en ce que** l'arbre (14) consiste en une tige cylindrique rectiligne.

5. Dispositif suivant l'une quelconque des revendications 1 à 3 ***caractérisé* en ce que** l'arbre (14) consiste en une tige cylindrique en forme générale de U dont les extrémités supérieures sont repliées vers l'extérieur pour former deux branches coaxiales (14a,14b), chaque branche (14a,14b) portant au moins un rouleau magnétique (15).

6. Dispositif suivant l'une quelconque des revendications 1 à 5 ***caractérisé* en ce qu'**il comporte à chacune des extrémités libre de l'arbre un disque (21) obtenu dans du plastique ou dans un élastomère afin d'amortir les chocs.

7. Dispositif suivant l'une quelconque des revendications 1 à 6 ***caractérisé* en ce que** au moins deux rouleaux magnétiques (15) s'étendant de part et d'autre de la tête (9) de l'organe d'application (7) comportent des moyens de marquage (22) de l'élément adhésif à poser.

8. Dispositif suivant la revendication 7 ***caractérisé* en ce que** lesdits moyens de marquage (22) consistent en des moyens de perforation de l'élément adhésif.

9. Dispositif suivant la revendication 8 ***caractérisé* en ce que** les moyens de perforation consistent en des picots (23) solidaires de la périphérie des rouleaux magnétiques (15) et s'étendant radialement.

10. Dispositif suivant la revendication 9 ***caractérisé* en ce que** lesdits picots (23) présentent une forme conique.

11. Dispositif suivant l'une quelconque des revendications 1 à 10 ***caractérisé* en ce qu'**il comporte une butée (24) constituée d'une pièce (25) solidaire de la tête (9) de l'organe d'application (7), s'étendant dans le prolongement de l'organe de préhension (6), entre les rouleaux magnétiques (15) et faisant saillie de ces derniers.

12. Dispositif suivant l'une quelconque des revendications 1 à 11 ***caractérisé* en ce que** l'organe de préhension (6) est constitué d'un manche comportant au moins deux parties (6a,6b), une partie dite proximale (6a) portant une poignée de préhension (8), et une partie dite distale (6b) articulée à la partie proximale (6a) et dont l'extrémité libre porte la tête (9) de l'organe d'application (7).

13. Dispositif suivant la revendication 12 ***caractérisé* en ce que** la partie distale (6b) est articulée à la partie proximale (6a) par une articulation (10) suivant au moins un axe.

14. Dispositif suivant la revendication 13 ***caractérisé* en ce que** l'articulation (10) comporte des moyens de blocage (11,12) dans une position angulaire déterminée.

15. Dispositif suivant l'une quelconque des revendications 1 à 13 ***caractérisé* en ce que** les rouleaux magnétiques (15) présentent un champ magnétique compris entre 1000 et 6000 Gauss afin que ledit champ magnétique s'exerce à travers l'épaisseur de l'élément adhésif pour exercer une pression suffisante des rouleaux (15) sur ledit élément adhésif et permettre le retrait des rouleaux magnétiques (15) manuellement après l'application dudit élément adhésif.

## Patentansprüche

1. Vorrichtung zur Aufbringung eines Klebelements auf eine metallische Aufbringungsfläche, insbesondere einer selbstklebenden Dachversteifung auf der Innenseite eines Dachhimmels (1) eines Kraftfahrzeugs, die mindestens ein Greiforgan (6) und ein Aufbringungsorgan (7) umfasst, welches aus mindestens einer Magnetrolle (15) besteht, die frei drehbar um eine Welle (14) montiert ist, wobei die Welle (14) in ihrem mittleren Teil fest mit einem Kopf (9) verbunden ist, der über eine Kugelgelenkverbindung (13) fest mit dem freien Ende des Greiforgans (6) verbunden ist, **dadurch *gekennzeichnet,* dass** die Welle (14) mindestens zwei Magnetrollen (15) trägt, die frei drehbar um die Welle (14) montiert sind und sich zu beiden Seiten der Kugelgelenkverbindung (13) erstrecken.

2. Vorrichtung nach Anspruch 1, **dadurch *gekennzeichnet,* dass** die Kugelgelenkverbindung (13) aus mindestens einem im Wesentlichen kugelförmigen Sitz (17) besteht, der im Kopf (9) des Aufbringungsorgans (7) ausgebildet ist und in dem sich eine Kugel (18) erstreckt, die ein Loch (19) umfasst, welches die Kugel (18) diametral durchquert und in dem sich die Welle (14) erstreckt, die die Magnetrollen (15) trägt.

3. Vorrichtung nach Anspruch 2, **dadurch *gekennzeichnet,* dass** die Kugelgelenkverbindung (13) ein im Wesentlichen zylindrisches Teil (20) umfasst, das aus einem Elastomer erhalten wird, und sich zwischen dem Sitz (17) und der Kugel (18) der Kugelgelenkverbindung (13) erstreckt.

4. Vorrichtung nach einem der Ansprüche 1 bis 3, **dadurch *gekennzeichnet,* dass** die Welle (14) aus einem geraden zylindrischen Schaft besteht.

5. Vorrichtung nach einem der Ansprüche 1 bis 3, **dadurch *gekennzeichnet,* dass** die Welle (14) aus einem im Allgemeinen U-förmigen zylindrischen Schaft besteht, dessen obere Enden nach außen gebogen sind, um zwei koaxiale Abzweigungen (14a, 14b) zu bilden, wobei jede Abzweigung (14a, 14b) mindestens eine Magnetrolle (15) trägt.

6. Vorrichtung nach einem der Ansprüche 1 bis 5, **dadurch *gekennzeichnet,* dass** sie an jedem der freien Enden der Welle zur Dämpfung von Stößen eine Scheibe (21) umfasst, die aus Kunststoff oder aus einem Elastomer erhalten wird.

7. Vorrichtung nach einem der Ansprüche 1 bis 6, **dadurch *gekennzeichnet,* dass** mindestens zwei Magnetrollen (15), die sich zu beiden Seiten des Kopfes (9) des Aufbringungsorgans (7) erstrecken, Mittel zur Markierung (22) des zu verlegenden Klebeelements umfassen.

8. Vorrichtung nach Anspruch 7, **dadurch *gekennzeichnet,* dass** die Mittel zur Markierung (22) aus Mitteln zur Perforation des Klebeelements bestehen.

9. Vorrichtung nach Anspruch 8, **dadurch *gekennzeichnet,* dass** die Perforationsmittel aus Stacheln (23) bestehen, die fest mit dem Umfang der Magnetrollen (15) verbunden sind und sich radial erstrecken.

10. Vorrichtung nach Anspruch 9 **dadurch *gekennzeichnet,* dass** die Stacheln (23) eine konische Form aufweisen.

11. Vorrichtung nach einem der Ansprüche 1 bis 10, **dadurch *gekennzeichnet,* dass** sie einen Anschlag (24) umfasst, der aus einem Teil (25) gebildet wird, das fest mit dem Kopf (9) des Aufbringungsorgans (7) verbunden ist, sich in der Verlängerung des Greiforgans (6) zwischen den Magnetrollen (15) erstreckt und aus diesen hervorsteht.

12. Vorrichtung nach einem der Ansprüche 1 bis 11, **dadurch *gekennzeichnet,* dass** das Greiforgan (6) aus einem Stiel gebildet wird, der mindestens zwei Teile (6a, 6b) umfasst, einen sogenannten proximalen Teil (6a), der einen Handgriff (8) umfasst, und einen sogenannten distalen Teil (6b), der an dem proximalen Teil (6a) angelenkt ist und dessen freies Ende den Kopf (9) des Aufbringungsorgans (7) trägt.

13. Vorrichtung nach Anspruch 12, **dadurch *gekennzeichnet,* dass** der distale Teil (6b) über ein Gelenk (10) entlang mindestens einer Achse an dem proximalen Teil (6a) angelenkt ist.

14. Vorrichtung nach Anspruch 13, **dadurch *gekennzeichnet,* dass** das Gelenk (10) Mittel zum Blockieren (11, 12) in einer bestimmten Winkelposition aufweist.

15. Vorrichtung nach einem der Ansprüche 1 bis 13, **dadurch *gekennzeichnet,* dass** die Magnetrollen (15) ein Magnetfeld zwischen 1000 und 6000 Gauß aufweisen, damit das Magnetfeld durch die Dicke des Klebeelements hindurch wirkt, um einen ausreichenden Druck der Rollen (15) auf das Klebeelement auszuüben und ein manuelles Entfernen der Magnetrollen (15) nach dem Aufbringen des Klebeelements zu ermöglichen.

## Claims

1. Device for applying an adhesive element on a metal application surface, in particular a self-adhesive roof stiffener on the inner face of a roof panel (1) of a motor vehicle, comprising at least one gripping member (6) and an application member (7) constituted of at least one magnetic roller (15) mounted free in rotation about a shaft (14), said shaft (14) being secured in its central portion to a head (9) integral with the free end of the gripping member (6) by a ball connection (13), ***characterised* in that** said shaft (14) carries at least two magnetic rollers (15) mounted free in rotation about said shaft (14) and extending on either side of said ball connection (13).

2. Device according to claim 1, ***characterised* in that** said ball connection (13) is formed at least of one seat (17) substantially spherical formed in the head (9) of the application member (7) and wherein a sphere (18) extends comprising a hole (19) diametrically passing through said sphere (18) and wherein the shaft (14) extends, carrying the magnetic rollers (15).

3. Device according to claim 2, ***characterised* in that** the ball connection (13) comprises a substantially cylindrical part (20) obtained in an elastomer and extending between the seat (17) and the sphere (18) of the ball connection (13).

4. Device according to any one of claims 1 to 3, ***characterised* in that** the shaft (14) consists in a rectilinear cylindrical rod.

5. Device according to any one of claims 1 to 3, ***characterised* in that** the shaft (14) consists in a generally U-shaped cylindrical rod, of which the upper ends are folded outwards to form two coaxial branches (14a, 14b), each branch (14a, 14b) carrying at least one magnetic roller (15).

6. Device according to any one of claims 1 to 5, ***characterised* in that** it comprises, at each of the free ends of the shaft, a disk (21) obtained in plastic or in an elastomer in order to dampen the shocks.

7. Device according to any one of claims 1 to 6, ***characterised* in that** at least two magnetic rollers (15) extending on either side of the head (9) of the application member (7) comprise marking means (22) of the adhesive element to be laid.

8. Device according to claim 7, ***characterised* in that** said marking means (22) consist in means for perforating the adhesive element.

9. Device according to claim 8, ***characterised* in that** the perforation means consist in pins (23) integral with the periphery of the magnetic rollers (15) and extending radially.

10. Device according to claim 9, ***characterised* in that** said pins (23) present a conical shape.

11. Device according to any one of claims 1 to 10, ***characterised* in that** it comprises a stop (24) constituted of a part (25) integral with the head (9) of the application member (7), extending in the extension of the gripping member (6), between the magnetic rollers (15) and projecting from the latter.

12. Device according to any one of claims 1 to 11, ***characterised* in that** the gripping member (6) is constituted of a sleeve comprising at least two portions (6a, 6b), one portion called proximal (6a) carrying a handle (8), and one portion called distal (6b) articulated to the proximal portion (6a) and of which the free end carries the head (9) of the application member (7).

13. Device according to claim 12, ***characterised* in that** the distal portion (6b) is articulated to the proximal portion (6a) by an articulation (10) according to at least one axis.

14. Device according to claim 13, ***characterised* in that** the articulation (10) comprises blocking means (11, 12) in a determined angular position.

15. Device according to any one of claims 1 to 13, ***characterised* in that** the magnetic rollers (15) present a magnetic field comprised between 1000 and 6000 Gauss such that said magnetic field is exerted through the thickness of the adhesive element to exert a sufficient pressure from the rollers (15) on said adhesive element and allow the removal of magnetic rollers (15) manually after the application of said adhesive element.
